# EUROPEAN PATENT SPECIFICATION

(11) **EP 1 840 994 B1**
(45) Date of publication and mention of the grant of the patent: **22.12.2010**
(21) Application number: 07000440.3
(22) Date of filing: 10.01.2007
(51) Int. Cl.: H01M 8/02, H01M 8/04

(54) **Gas-inlet pressure adjustment structure for flow field plate of fuel cell stack**
Einstellkonstruktion für Gaseinlassdruck einer Flussfeldplatte eines Brennstoffzellenstapels
Structure d'ajustement de la pression d'entrée de gaz pour une plaque à champ d'écoulement d' un bloc de piles à combustible

(30) Priority: 28.03.2006 CN 200610066412
(43) Date of publication of application: 03.10.2007
(73) Proprietor: Asia Pacific Fuel Cell Technologies, Ltd., Chunan, Miaoli 350 (TW)
(72) Inventor: Yang, Jefferson YS, CA 92869 (US); Hsu, Yao-Sheng, Wenshan Chiu Taipei 116 (TW); Kao, Mike Pen-Mu, Anaheim, CA 92807 (US); Hsiao, Feng-Hsiang, Taipei 110 (TW)
(74) Representative: Goddar, Heinz J.

(56) References cited:
- EP-A- 1 480 284
- EP-A- 1 498 971
- JP-A- 1 063 271
- JP-A- 62 090 871
- US-A1- 2003 077 501

## Description

### FIELD OF THE INVENTION

The present invention relates to the field of fuel cell, and in particular to a gas-inlet pressure adjustment structure for a flow field plate of the fuel cell stack.

### BACKGROUND OF THE INVENTION

With the development of human civilization, the consumption of traditional energy sources such as coal, oil, and gas continuously increases, and as a consequence of the consumption of the fossil energy, environmental pollution gets more and more severe. The most significant examples of environment deterioration include temperature rise due to greenhouse effect and acidic rains. People are now well aware of the limitation of the natural resources and contributions are made to the development of new and replacement energies, among which fuel cell is one of the best potential for development and usages. Compared to the traditional internal combustion engine, the fuel cell features outstanding energy conversion efficiency, clean exhaustion gas, low noise, and the excluding of the using traditional fossil energy.

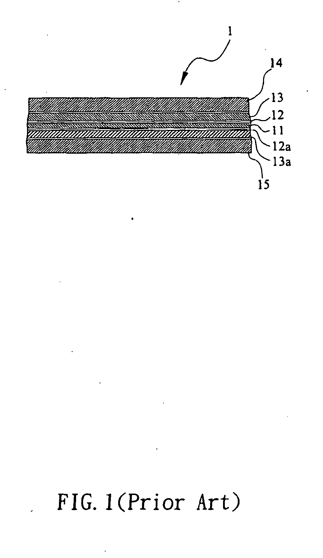

The fuel cell is an electrical generator that makes use of electro-chemical reaction between hydrogen and oxygen to generate electrical power. Generally speaking, the electro-chemical reaction carried out in the fuel cell is a reverse reaction of the electrolysis of water. Taking a proton exchange membrane fuel cell stack as an example, the fuel cell stack comprises a plurality of single cells, which will now be described with reference to **Figure 1****.** In **Figure 1****,** a cross-sectional view of a single cell of a conventional fuel cell assembly is shown, which includes a proton exchange membrane (PEM) **11** located at a central position of the single cell, two catalyst layers **12, 12a** arranged on opposite sides of the proton exchange membrane **11,** and two gas diffusion layers (GDLs) **13, 13a** arranged on outer sides of the catalyst layers **12, 12a** with an anode flow field plate **14** and a cathode flow field plate **15** arranged on the outermost sides thereof to complete the single cell 1. The anode flow field plate 14 is formed with a plurality of anode gas channels thereon, and the cathode flow field plate 15 is formed with a plurality of cathode gas channels thereon.

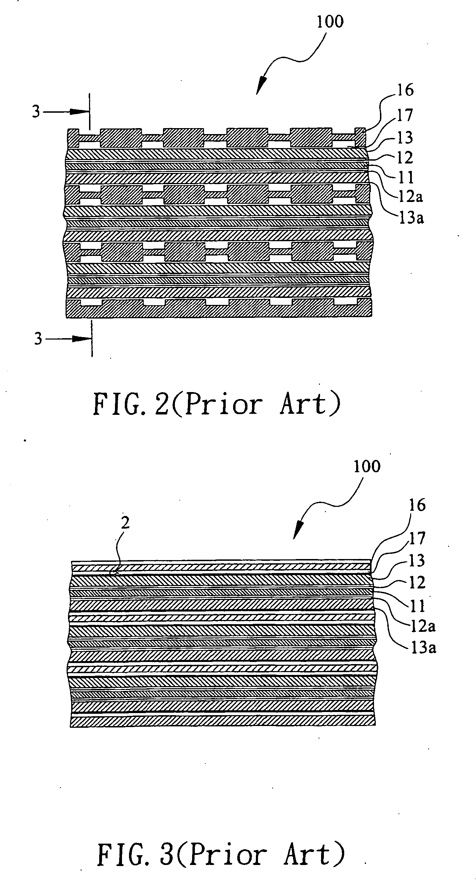

Also referring to **Figures 2** and **3****,** wherein **Figure 2** shows a cross-sectional view of a portion of the conventional fuel cell assembly, and **Figure 3** is a cross-sectional view taken along line **3-3** of **Figure 2****,** a conventional fuel cell assembly, which is designated with reference numeral **100,** a number of single cells **1** are stacked together with the anode flow field plate **14** of one single cell **1** and the cathode flow field plates of the next single cell **1** are combined together as a bipolar plate **16.** Opposite surfaces of the bipolar plate **16** form a plurality of channels **17,** serving as channels for conveying gases for the electro-chemical reaction, such as hydrogen and oxygen-contained gas, and for discharging products of the reaction, such as water droplets or moisture.

The gas flowing through the bipolar plate **16** (as well as the anode flow field plate **14** and the cathode flow field plate **15** shown in **Figure 1****)** must contains certain humidity in order to convey ions produced by the reaction through the proton exchange membrane **11** to effect proton exchange. When the water content carried by the gas decreases, the proton exchange membrane become dehumidified, and hence it increases the electrical resistance of the fuel cell assembly **100,** reduces the voltage level, and further shortens the life span of the fuel cell assembly **100.** Thus, a humidifier is often provided to ensure the gas that flows into the fuel cell assembly contains sufficient humidity.

On the other hand, heavy loading of water in the gases often results in condensation of water droplets **2** under specific conditions. The water droplets **2** may attach to the surface of the channels **17** by surface tension, and once a sufficient amount of water **2** accumulated on the surface of the channels **17,** the cross-sectional area of the channels **17** that is effective for the flowing of gas is reduced or even blocked. Such a phenomenon hinders gas from flowing through the channels **17** and thus interrupts the reaction inside the fuel cell assembly **100.** It will also reduce the performance of the fuel cell assembly **100.** Thus, the configuration of the channels **17** of the bipolar plate **16** (as well as the anode flow field plate and cathode flow field plate) is important for the fuel cell assembly **100.**

If the channels **17** are blocked by the condensed water **2** and the pressures at the inlet end and the outlet end of the channels **17** are substantially the same or close to each other, a force acting on the water **2,** which is the product of the pressure difference ΔP₁ between the inlet end and the outlet end of the channels **17** and the cross-sectional area of the channels **17,** is insufficient to overcome the viscous force and surface tension of the water **2.** As a result, water **2** maintains inside the channels **17.** To eliminate the accumulation of water **2** in the channels **17** one the most commonly measures is to simply increase the pressure at the inlet end of the channels **17,** which in turn increases the product of the pressure difference ΔP₁ and the cross-sectional area, to such an extent sufficient to blow the water out of the channel **17.**

However, practical experience shows that when the pressure difference ΔP₁ is great enough to generate sufficient force to drive the water out of the channels, the pressure at the inlet end of the channels **17** is often very high. This high pressure will cause the displacement or peeling of the proton exchange membrane, the catalyst layers, and the gas diffusion layers, or even the breaking or the damaging of the proton exchange membrane, the catalyst layers, and the gas diffusion layers.

Thus, the conventional fuel cell must be timely humidified in order to maintain the motivity of reaction ions and to prevent the proton exchange membrane from dehumidification. However, on the other hand, the conventional fuel cell suffers from blocking by condensed water that negatively affects the operation of the fuel cell assembly. The incorporation of a pressure boosting device, such as a blower, to increase the pressure inside the channels for removing the condensed water out of the channel would adversely cause displacement, stripping and damage of the proton exchange membrane, the catalyst layers, and the gas diffusion layers.

US 2003/0077501 A1 discloses an electrochemical fuel cell having reactant flow passages with a non-uniform design to increase reactant access to an adjacent fluid distribution layer at the outlet region as compared to the inlet region. At least one reactant flow passage is narrower at the inlet than at the outlet, with a substantially constant cross-sectional area maintained along its length. Coolant channels may optionally be incorporated in the fluid flow plate to provide increased cooling at the reactant inlet.

EP 1 480 284 A1 discloses a fuel cell assembly comprising a flow passageway having a region of graduated cross sectional area along the flow passageway for maintaining a reaction equilibrium. The region may be defined by the arrangement of stacked fuel cell elements alone or in combination with additional shaped spacers.

Thus, the present invention is aimed to provide a gas-inlet pressure adjustment structure for a flow field plate of a fuel cell, which has a reduced cross-sectional area at an inlet end of the channels to reduce the contact area between the proton exchange membrane and the channels so as to reduce the surface area of the proton exchange membrane, to which outward driving forces are induced by the high pressure gases in the channels.

### SUMMARY OF THE INVENTION

The object is solved by a gas-inlet pressure adjustment structure according to claim 1. Preferred embodiments are disclosed in the subclaims.

To solve the problem encountered in the conventional fuel cell assembly, the present invention provides a gas-inlet pressure adjustment structure for a flow field plate of a fuel cell, wherein the flow field plate is constructed in a fuel cell and is covered with a proton exchange membrane. The flow field plate includes at least one gas inlet opening, one gas outlet opening, and a plurality of channels. The channels are of a parallel arrangement and each has a reduced open end and an expanded open end. The reduced open end has a cross-sectional area smaller than that of the expanded open end. The reduced open end communicates with the gas inlet opening, while the expanded open end communicates with the gas outlet opening.

Water droplets are generated inside the channels when the chemical reaction is carried out in the fuel cell. The water attaches to the surface of the channels by the surface tension. A pressure boosting device, such as a blower, is employed to increase the pressure at the gas inlet opening to such an extent that the pressure difference between ends of the channels is sufficient to drive the water out of the channels through the gas outlet opening.

Further, since the cross-sectional area at the reduced open end is small, which makes the contact area between the proton exchange membrane and the reduced open end of the channel small and thus reduces the outward driving force induced by the gas pressure inside the channel, it is less likely for the proton exchange membrane, the catalyst layers, and the gas diffusion layers to displace, peel, break or damage.

In comparison with conventional technologies, the gas-inlet pressure adjustment structure of the flow field plate of the fuel cell in accordance with the present invention can effectively remove the water condensed in the gas channel thereof and also reduces the outward driving force acting on the proton exchange membrane induced by the pressure to thereby protect the proton exchange membrane from displacing, peeling, breaking and otherwise damaging.

### BRIEF DESCRIPTION OF THE DRAWINGS

The present invention will be apparent to those skilled in the art by reading the following description of preferred embodiments thereof, with reference to the attached drawings, in which:

**Figure 1** schematically shows a cross-section of a single cell of a conventional fuel cell assembly;

**Figure 2** shows a cross-sectional view of a portion of the conventional fuel cell assembly;

**Figure 3** shows a cross-sectional view taken along line **3-3** of **Figure 2****;**

**Figure 4** shows a plan view of a flow field plate for a fuel cell in accordance with a first embodiment of the present invention;

**Figure 5** shows an enlarged view of encircled portion **A** in **Figure 4****;**

**Figure 6** shows a cross-sectional view taken along line **6-6** of **Figure 5****;**

**Figure 7** shows a cross-sectional view taken along line **7-7** of **Figure 5****;**

**Figure 8** shows relative positions between portions of the flow field plate of the first embodiment of the present invention and a membrane electrode assembly;

**Figure 9** shows a cross-sectional view illustrating that adjacent flow field plates of the present invention are sealed with a sealing element;

**Figure 10** schematically shows the channels of the flow field plate of the present invention to illustrate expulsion of condensed water from the channels by pressure difference;

**Figure 11** schematically shows a flow field plate constructed in accordance with a second embodiment; and

**Figure 12** schematically shows a flow field plate constructed in accordance with a third embodiment.

### DETAILED DESCRIPTION OF THE PREFERRED EMBODIMENTS

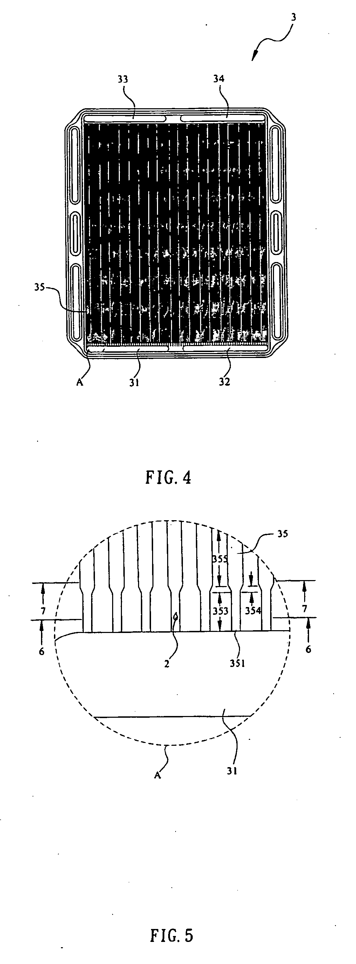

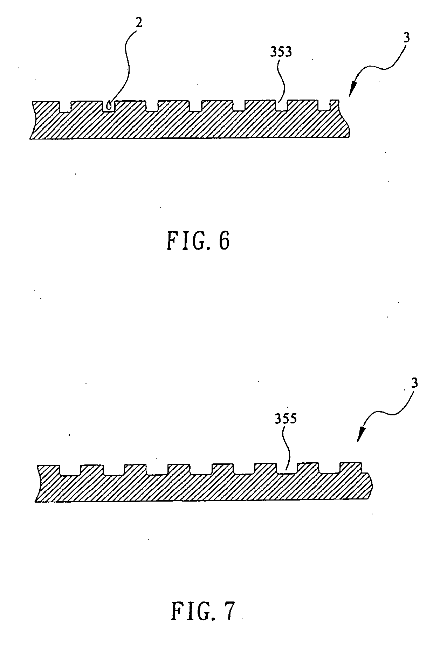

With reference to the drawings and in particular to **Figures 4** to **8****,** a flow field plate, which constitutes in part a fuel cell stack, constructed in accordance with the present invention, generally designated with reference numeral **3,** comprises two gas inlet openings **31, 32,** two gas outlet openings **33, 34,** and a plurality of channels **35.** A membrane electrode assembly **4** and another flow field plate **3'** are sequentially stacked over the flow field plate **3.** The flow field plate **3** forms a circumferentially extending groove **36** surrounding a central zone of the flow field plate **3** in a surface opposing the flow field plate **3'** and similarly, the flow field plate **3'** forms a counterpart groove facing the flow field plate **3.**

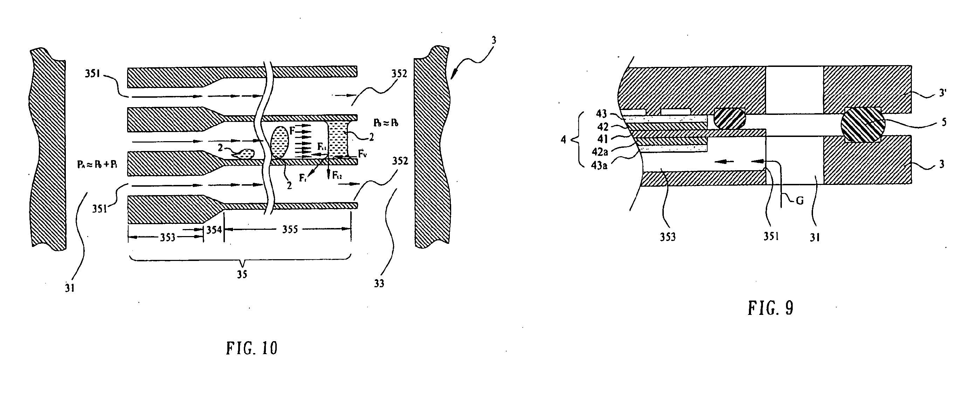

A sealing element **5** (as shown in **Figure 9****,** the sealing element **5** comprises a loop-like thermoplastic member in the embodiment illustrated) is received in the grooves **36** and retained between the flow field plates **3, 3'** to tightly enclose the gas inlet openings **31, 32,** the gas outlet openings **33, 34,** the channels **35,** and the membrane electrode assembly **4** between the flow field plates **3, 3'** with open top sides of the channels **35** in contact with the membrane electrode assembly **4.**

The membrane electrode assembly **4** comprises a proton exchange membrane **41,** two catalyst layers **42, 42a,** and two gas diffusion layers **43, 43a.**

Also referring to **Figure 10****,** the channels **35** are formed on the flow field plate **3** in a parallel arrangement and have a reduced open end **351** and an expanded open end **352.** The reduced open end **351** has a cross-sectional area smaller than that of the expanded open end **352.** The reduced open ends **351** are in communication with the gas inlet opening **31,** while the expanded open ends **352** are in communication with the gas outlet opening **33.**

Each channel **35** is comprised of a narrow channel section **353,** a divergent channel section **354,** and a wide channel section **355.** The narrow channel section **353** communicates with the gas inlet opening **31** via the reduced open end **351.** The divergent channel section **354** is extended and communicates between the narrow channel section **353** and the wide channel section 355 with cross-sectional area thereof increased from where the divergent channel section **354** connects to the narrow channel section **353** to where the divergent channel section **354** connects to the wide channel section **355.** The wide channel section **355** communicates with the gas outlet opening **33** via the expanded open end **352.**

When gas reaction occurs inside the fuel cell, a reaction gas G, which can be hydrogen or a gas containing oxygen, enters the flow field plate **3** via the gas inlet opening **31,** flowing in sequence through the narrow channel section **353,** the divergent channel section **354,** and the wide channel section **355** to carry out gas reaction. After the reaction, reacted gas flows out of the flow field plate **3** via the gas outlet opening **33.**

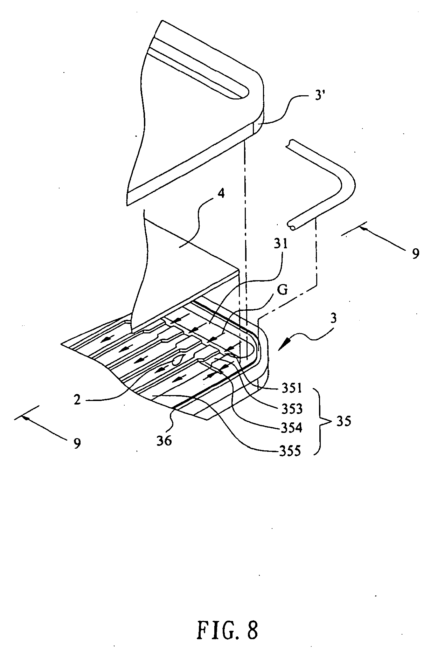

As shown in **Figure 8****,** after the gas reaction, water **2** formed may condense on the surface of the channel **35** and attaches to the surface of the channel **35** due to attraction induced by surface tension, and gradually blocks the channel **35.** At this moment, a pressure boosting device, such as a blower, can be employed to increase the pressure of the reaction gas in the gas inlet opening **31,** whereby the pressure of the reaction gas in the gas inlet opening **31** gets greater than the pressure in the gas outlet opening **33.** Such a pressure difference suffices to force the reaction gas to expel the condensed water **2** out of the gas channel **35** through the gas outlet opening **33.** Further, since the top open side of the channel **35** is in direct contact with the membrane electrode assembly **4,** the pressure difference also causes force acting upon the membrane electrode assembly **4.**

To further explain, referring to **Figure 10****,** assuming, without losing generality, that the pressure of the gas inlet opening **31** is **P_{A},** which is approximately equal to the boosting pressure **P₁** provided by the pressure boosting device, plus surrounding pressure, which is approximately one atmosphere, **P₀**. The pressure **P_{B}** of the gas outlet opening **33** corresponds to the surrounding pressure, that is approximately one atmosphere, **P₀.**

The resultant force **F** is thus the multiplication of the pressure difference ΔP₂, approximately equal to subtraction of **P_{B}** from **P_{A},** by the cross-sectional area A of the channel. In other words, **F** = ΔP₂ × A. When the channel **35** is blocked by the condensed water **2,** a viscous force **Fᵥ** and a surface tension Fₜ are present between the water **2** and the surface of the channel **35.** The surface tension **Fₜ** can be resolved into a horizontal component **Fₜ₁** and a vertical component Fₜ₂. Based on Newton's laws of force, when the resultant force **F** caused by pressure difference is greater than the sum of the viscous force **Fᵥ** and the horizontal component **Fₜ₁** of the surface tension **Fₜ,** namely **F** > **Fᵥ** + **Fₜ₁**, the condensed water **2** will be forced toward the gas outlet opening **33** and is eventually expelled out of the channel **35.**

It is apparent to those having ordinary skills in the art that the flow field plate **3** can be an anode flow field plate or a cathode flow field plate or a bipolar plate. Further, the gas inlet opening **31** can be an inlet for hydrogen or an oxygen-contained gas that is required for the reaction of the fuel cell stack. In addition, the reduced open end **351** of the channel **35** has a small cross-sectional area and thus forms a small contact area with the membrane electrode assembly **4** so that the outward driving force acting on the membrane electrode assembly **4** by the pressure inside the channel **35** is reduced and thus breaking, damaging and/or peeling of the catalyst layers **42, 42a,** and gas diffusion layers **43, 43a** of the membrane electrode assembly **4** caused by the outward driving force is less likely to happen.

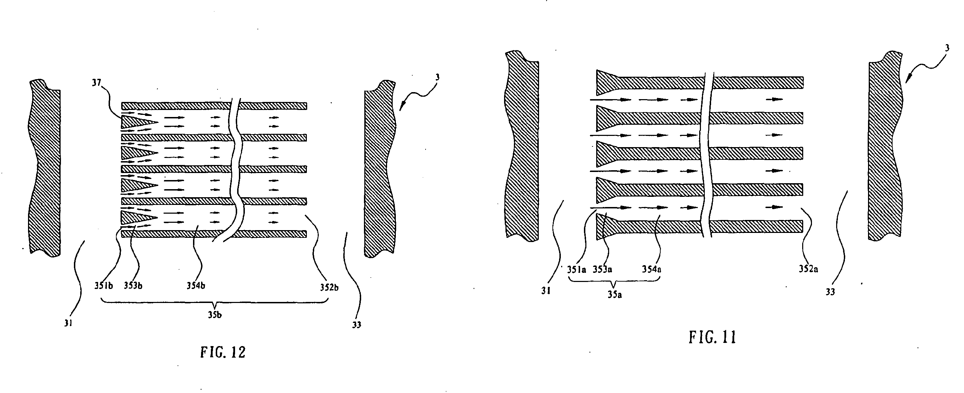

Referring to **Figure 11****,** which schematically shows a flow field plate constructed in accordance with a second embodiment, a major difference between the second embodiment illustrated in **Figure 11** and that of first embodiment illustrated in **Figure 10** resides in a modified channel **35a,** which replaces the channel **35** of the embodiment shown in **Figure 10****.** The channel **35a** has a reduced open end **351a** and an expanded open end **352a** and the reduced open end **351a** has a cross-sectional area smaller than that of the expanded open end **352a.**

The reduced open end **351a** communicates with the gas inlet opening **31,** while the expanded open end **352** communicates with the gas outlet opening **33.** The channel **35a** is composed of a divergent channel section **353a** and a wide channel section **354a.** The divergent channel section **353a** is extended from the reduced open end **351a** to the wide channel section **354a** and communicates with the gas inlet openings **31** via the reduced open end **351a.** The wide channel section **354a** communicates with the gas outlet opening **33** via the expanded open end **352a.**

Referring to **Figure 12****,** which shows a flow field plate constructed in accordance with a third embodiment, a major difference between the third embodiment illustrated in **Figure 12** and the first embodiment illustrated in **Figure 10** resides in a modified channel **35b,** which replaces the channel **35** of the embodiment shown in **Figure 10****.** The **channel 35b** has an end in communication with the gas inlet opening **31** and an opposite end in communication with the gas outlet opening **33.**

An inverted triangular flow division wedge **37** is arranged in the end of the channel **35b** that communicates with the gas inlet opening **31** to make the end a reduced open end **351b.** The opposite end of the channel **35b** that communicates with the gas outlet opening **33** thus serves as an expanded open end **352b** of the channel **35b.** Thus, the reduced open end **351b** has a cross-sectional area smaller than that of the expanded open end **352b.** The channel **35b** is thus composed of a divergent channel section **353b,** which is the portion of the channel **35b** that accommodates the flow division wedge **37,** and a wide channel section **354b.** The divergent channel section **353b** is extended from the reduced open end **351b** to the wide channel section **354b** and communicates with the gas inlet openings **31** via the reduced open end **351b.** The wide channel section **354b** communicates with the gas outlet opening **33** via the expanded open end **352b.**

Although the present invention has been described with reference to the preferred embodiment thereof, it is apparent to those skilled in the art that a variety of modifications and changes may be made without departing from the scope of the present invention which is intended to be defined by the appended claims.

## Claims

1. A gas-inlet pressure adjustment structure for a flow field plate (3) having a central zone and a membrane electrode assembly (4) stacked over the central zone of a fuel cell stack (100), comprising:
at least one gas inlet opening (31) for supplying a reaction gas (G) to the flow field plate (3);
at least one gas outlet opening (33) for discharging gas from the flow field plate (3); and
a plurality of channels (35) in a parallel arrangement and each having a reduced open end (351) for communicating the gas inlet opening (31) and an expanded open end (352) for communicating the gas outlet opening (33);
**characterized in that** the reduced open end (351) has a cross-sectional area smaller than a cross-sectional area of the expanded open end (352), each channel (35) comprises a wide channel section (355) with a constant width for communicating the gas outlet opening (33) via the expanded open end (352), and a divergent channel section (354) with one end communicating with the wide channel section (355) and the other end communicating with the gas inlet opening (31) via the reduced open end (351), wherein the channel (35) further comprises a narrow channel section (353) with a constant width connected between the reduced open end (351) and the divergent channel section (354).

2. The gas-inlet pressure adjustment structure as claimed in claim 1, wherein the flow field plate (3) is an anode flow field plate of the fuel cell stack (100).

3. The gas-inlet pressure adjustment structure as claimed in claim 1, wherein the flow field plate (3) is a cathode flow field plate of the fuel cell stack (100).

4. The gas-inlet pressure adjustment structure as claimed in claim 1, wherein the flow field plate (3) is a bipolar plate of the fuel cell stack (100).

5. The gas-inlet pressure adjustment structure as claimed in claim 1, wherein the gas inlet opening (31) serves as an inlet of hydrogen and the gas outlet opening (33) serves as an outlet of hydrogen.

6. The gas-inlet pressure adjustment structure as claimed in claim 1, wherein the gas inlet opening (31) serves as an inlet of an oxygen-contained gas and the gas outlet opening (33) serves as an outlet of the oxygen-contained gas.

## Patentansprüche

1. Einstellkonstruktion für Gaseinlassdruck einer Flussfeldplatte (3) mit einer zentralen Zone und einem Membranelektrodenaufbau (4), gestapelt über der zentralen Zone eines Brennstoffzellenstapels (100), welche umfasst:
wenigstens eine Gaseinlassöffnung (31) zum Liefern eines Reaktionsgases (G) zu der Flussfeldplatte (3);
wenigstens eine Gasauslassöffnung (33) zum Abgeben von Gas aus der Flussfeldplatte (3); und
eine Vielzahl von Kanälen (35) in einer parallelen Anordnung und mit jeweils einem verkleinerten offenen Ende (351) zum Kommunizieren mit der Gaseinlassöffnung (31) und einem expandierten offenen Ende (352) zum Kommunizieren mit der Gasauslassöffnung (33);
**dadurch gekennzeichnet, dass** das verkleinerte offene Ende (351) eine Querschnittsfläche aufweist, die kleiner ist als eine Querschnittsfläche des expandierten offenen Endes (352), wobei jeder Kanal (35) einen weiten Kanalabschnitt (355) mit einer konstanten Breite zum Kommunizieren mit der Gasauslassöffnung (33) über das expandierte offene Ende (352) und einen auseinanderlaufenden Kanalabschnitt (354), wobei ein Ende mit dem weiten Kanalabschnitt (355) kommuniziert und das andere Ende mit der Gaseinlassöffnung (31) über das verkleinerte offene Ende (351) kommuniziert, umfasst, wobei der Kanal (35) ferner einen schmalen Kanalabschnitt (353) mit einer konstanten Breite umfasst, der zwischen dem verkleinerten offenen Ende (351) und dem auseinanderlaufenden Kanalabschnitt (354) eingebunden ist.

2. Einstellkonstruktion für Gaseinlassdruck nach Anspruch 1, wobei die Flussfeldplatte (3) eine Anodenflussfeldplatte des Brennstoffzellenstapels (100) ist.

3. Einstellstruktur für Gaseinlassdruck nach Anspruch 1, wobei die Flussfeldplatte (3) eine Kathodenflussfeldplatte des Brennstoffzellenstapels (100) ist.

4. Einstellstruktur für Gaseinlassdruck nach Anspruch 1, wobei die Flussfeldplatte (3) eine bipolare Platte des Brennstoffzellenstapels (100) ist.

5. Einstellkonstruktion für Gaseinlassdruck nach Anspruch 1, wobei die Gaseinlassöffnung (31) als ein Einlass von Wasserstoff dient und die Gasauslassöffnung (33) als ein Auslass von Wasserstoff dient.

6. Einstellkonstruktion für Gaseinlassdruck nach Anspruch 1, wobei die Gaseinlassöffnung (31) als ein Einlass eines Sauerstoff enthaltenden Gases dient und die Gasauslassöffnung (33) als ein Auslass des Sauerstoff enthaltenden Gases dient.

## Revendications

1. Une structure de réglage de pression d'entrée de gaz pour une plaque de champ d'écoulement (3) ayant une zone centrale et un ensemble d'électrode à membrane (4) empilé au-dessus de la zone centrale d'un empilement de piles à combustible (100), comprenant :
au moins un orifice d'entrée de gaz (31) pour fournir un gaz réactif (G) à la plaque de champ d'écoulement (3) ;
au moins un orifice de sortie de gaz (33) pour décharger le gaz de la plaque de champ d'écoulement (3) ; et
une pluralité de canaux (35) dans un agencement parallèle et chacun ayant une extrémité ouverte réduite (351) pour communiquer avec l'orifice d'entrée de gaz (31) et une extrémité ouverte élargie (352) pour communiquer avec l'orifice de sortie de gaz (33) ;
**caractérisé en ce que** l'extrémité ouverte réduite (351) a une aire transversale plus petite qu'une aire transversale de l'extrémité ouverte élargie (352), chaque canal (35) comprend une section de canal plus large (355) ayant une largeur constante pour communiquer avec l'orifice de sortie de gaz (33) via l'extrémité ouverte élargie (352), et une section de canal divergente (354) avec une extrémité communiquant avec la section de canal large (355) et l'autre extrémité communiquant avec l'orifice d'entrée de gaz (31) via l'extrémité ouverte réduite (351), où le canal (35) comprend en plus une section de canal étroite (353) avec une largeur constante connectée entre l'extrémité ouverte réduite (351) et la section de canal divergente (354).

2. La structure de réglage de pression d'entrée de gaz selon la revendication 1, où la plaque de champ d'écoulement (3) est une plaque de champ d'écoulement d'anode de l'empilement de piles à combustible (100).

3. La structure de réglage de pression d'entrée de gaz selon la revendication 1, où la plaque de champ d'écoulement (3) est une plaque de champ d'écoulement de cathode de l'empilement de piles à combustible (100).

4. La structure de réglage de pression d'entrée de gaz selon la revendication 1, où la plaque de champ d'écoulement (3) est une plaque bipolaire de l'empilement de piles à combustible (100).

5. La structure de réglage de pression d'entrée de gaz selon la revendication 1, où l'orifice d'entrée de gaz (31) sert d'entrée à l'hydrogène et l'orifice de sortie de gaz (33) sert de sortie à l'hydrogène.

6. La structure de réglage de pression d'entrée de gaz selon la revendication 1, où l'orifice d'entrée de gaz (31) sert d'entrée à un gaz contenant de l'oxygène et l'orifice de sortie de gaz (33) sert de sortie à un gaz contenant de l'oxygène.
